# EUROPÄISCHE PATENTSCHRIFT

(11) **EP 2 054 209 B1**
(45) Veröffentlichungstag und Bekanntmachung des Hinweises auf die Patenterteilung: **30.11.2011**
(21) Anmeldenummer: 07788022.7
(22) Anmeldetag: 30.07.2007
(51) Int. Cl.: B29C 45/16

(54) **Verfahren zur Herstellung eines mehrschichtigen Vorformlings sowie Düse hierfür**
Method for the production of a multi-layer preform and nozzle therefor
Procédé pour la fabrication d'une préforme multicouche et buse d'injection à cet effet

(30) Priorität: 26.08.2006 DE 102006040182
(43) Veröffentlichungstag der Anmeldung: 06.05.2009
(73) Patentinhaber: MHT Mold & Hotrunner Technology AG, 65239 Hochheim (DE)
(72) Erfinder: SCHWEININGER, Stefan, 65197 Wiesbaden (DE); WAGNER, Christian, 55118 Mainz (DE); PETRY, Rainer, 55270 Klein-Winternheim (DE); WINKLER, Erich, 63486 Bruchköbel (DE)
(74) Vertreter: Köppen, Manfred
(86) Internationale Anmeldenummer: PCT/EP2007/057814
(87) Internationale Veröffentlichungsnummer: WO 2008/025624

(56) Entgegenhaltungen:
- EP-A- 0 790 116
- EP-A1- 0 374 247
- EP-A2- 0 367 123
- EP-A2- 0 467 274
- EP-A2- 0 911 137
- WO-A-2005/018905
- DE-A1- 19 907 116
- US-A- 5 112 212
- US-A1- 2006 003 038
- DATABASE WPI Week 200352 Derwent Publications Ltd., London, GB; AN 2003-545414 XP002454718 -& JP 2002 361691 A (NISSEI ASB MACHINE CO LTD) 18. Dezember 2002 (2002-12-18)
- DATABASE WPI Week 199126 Derwent Publications Ltd., London, GB; AN 1991-188643 XP002454719 -& JP 03 114707 A (TOPPAN PRINTING CO LTD) 15. Mai 1991 (1991-05-15)

## Beschreibung

Die vorliegende Erfindung betrifft ein Verfahren zur Herstellung eines mehrschichtigen Vorformlings sowie eine Düse hierfür.

Insbesondere bei der Herstellung von PET-Flaschen ist es üblich, zunächst einen sogenannten Preform bzw. Vorformling herzustellen, der in einem weiteren Verfahrensschritt in die endgültige Flaschenform aufgeblasen wird. Zur Herstellung des Preforms kommt das Spritzgießverfahren zum Einsatz. Hier wird die flüssige Schmelze unter Druck in ein entsprechendes Formwerkzeug, auch Formnest genannt, eingespritzt.

Die bekannten PET-Flaschen werden hauptsächlich für die Verpackung von flüssigen Lebensmitteln, zum Beispiel von Trinkwasser, verwendet. Die Wände solcher PET-Flaschen sind jedoch beispielsweise für niedermolekulare Gase durchlässig, so daß die Haltbarkeit der verpackten Lebensmittel dadurch begrenzt wird. Darüber hinaus sind PET-Flaschen im allgemeinen transparent, was für lichtempfindliche Produkte von Nachteil ist.

Es ist daher vereinzelt bereits üblich, die Innen- oder Außenseite der PET-Flaschen mit einer sogenannten Barriereschicht zu beschichten. Diese Barriereschicht sorgt dafür, daß beispielsweise Sauerstoff oder Kohlendioxid in deutlich geringerem Ausmaß durch die Behälterwand hindurchtreten kann. Die Barriereschicht kann in alternativen Ausführungsformen auch eine Barriere gegenüber elektromagnetischer Strahlen im sichtbaren Wellenlängenbereicht oder im UV-Bereich sein, da einige Lebensmittel empfindlich gegenüber Lichteinstrahlung sind.

Es ist bereits vorgeschlagen worden, die Barriereschicht während des Aufblasens des Vorformlings in eine fertige PET-Flasche aufzubringen. Beim Blasformen von PET- Flaschen wird dann anstatt Druckluft beispielsweise Knallgas (ein Gemisch aus Wasserstoff und Sauerstoff) verwendet, wobei weitere Bestandteile zur Bildung der Barriereschicht bereits beigefügt sind. Durch das Zünden des explosiven Gemischs wird dann in einem Schritt der vorher erwärmte Preform in die Blasform gedrückt und an der Innenseite bildet sich eine Barriereschicht aus.

Die bekannten Verfahren der Beschichtung der Innen- und/oder Außenseite der PET-Flaschen haben jedoch den Nachteil, daß zum einen die Barriereschicht ausschließlich aus ungiftigen geschmacksneutralen Stoffen bestehen muß und zudem die Beschichtung leicht beschädigt werden kann.

Es ist daher bereits vorgeschlagen worden, den Vorformling mehrschichtig herzustellen, so daß sich nach dem Aufblasen des Vorformlings in eine PET-Flasche automatisch eine entsprechende Barriereschicht ausbildet.

Eine entsprechende Düse für das Injizieren von zwei Schmelzen unterschiedlicher Materialien ist beispielsweise beschrieben in der EP 1 426 160. Diese Schmelzenzuführeinrichtung besteht aus zwei konzentrisch zueinander angeordneten Zuführkanälen, durch welche die Schmelzen unterschiedlichen Spritzgießmaterials in das Formnest zugeführt werden können.

Diese Schmelzenzuführeinrichtung hat jedoch den Nachteil, daß die Dosierung des Barrierematerials nur sehr ungenau erfolgt. Zudem ist es dieser Vorrichtung nicht möglich, einen dreischichtigen Aufbau, bei dem die Barriereschicht gleichmäßig zwischen zwei PET-Schichten angeordnet ist, herzustellen. Weiterhin ist es vorgekommen, daß sich die einzelnen Schichten wieder delaminieren, was die PET-Flasche unbrauchbar macht.

In der JP-A-2002361691 ist eine Schmelzenzuführeinrichtung offenbart, mit der ein Vorformling mit einer dreischichtigen Wand hergestellt werden kann. Dazu sind drei Zuführkanäle konzentrisch zueinander angeordnet, wobei aus dem inneren und dem äußeren Kanal Schmelze desselben Materials austritt. Durch den mittleren Zuführkanal wird eine Schicht aus einem anderen Material zwischen die Schichten aus dem inneren und dem äußeren Kanal eingebracht.

Ausgehend von diesem Stand der Technik ist es Aufgabe der vorliegenden Erfindung, ein Koinjektionsverfahren bzw. eine Schmelzenzuführeinrichtung für eine Spritzgießvorrichtung anzugeben, mit dem ein Vorformling bestehend aus mindestens drei Schichten hergestellt werden kann, wobei ganz besonders die Barriereschicht exakt dosiert sowie weggelassen werden kann.

Erfindungsgemäß wird die Aufgabe gelöst durch eine Schmelzenzuführeinrichtung für eine Spritzgießvorrichtung mit einem ersten Heißkanal zur Zuführung einer Schmelze eines ersten Spritzgießmaterials unter Druck und einem zweiten Heißkanal zur Zuführung einer Schmelze eines zweiten Spritzgießmaterials sowie mindestens einem Düsenelement, welches mit sowohl dem ersten als auch dem zweiten Heißkanal verbunden ist, zur Zuführung von sowohl der ersten Schmelze als auch der zweiten Schmelze in eine Spritzgießform, wobei das mindestens eine Düsenelement drei im wesentlichen konzentrisch angeordnete Zufuhrkanäle hat, wobei der innerste und der äußerste Zuführkanal mit dem ersten Heißkanal in Verbindung stehen und der mittlere Zuführkanal mit dem zweiten Heißkanal in Verbindung steht, wobei weiterhin ein Verschlußelement vorgesehen ist, das zwischen einer ersten Position, in der das Verschlußelement alle Zuführkanäle verschließt, einer zweiten Position, in der das Verschlußelement den äu-βersten Zuführkanal öffnet, die beiden anderen Zuführkanäle jedoch verschließt, und einer dritten Position, in der das Verschlußelement alle Zuführkanäle öffnet, hin- und herbewegt werden kann.

Mit solch einer Schmelzenzuführeinrichtung ist es möglich, zunächst nur den äußeren Zuführkanal zu öffnen, so daß nur das erste Spritzgießmaterial, zum Beispiel PET, in das Formnest eingebracht wird. Dieses Material ist beispielsweise für die Ausbildung des Gewindeabschnitts vorgesehen, in dem keine Barriereschicht notwendig ist. Sobald genügend Material für den Gewindeabschnitt in das Formnest eingebracht worden ist, kann das Verschlußelement so weit geöffnet werden, daß nun alle drei konzentrischen, im wesentlichen ringförmigen Zuführkanäle offen sind. In dieser Position wird eine dreischichtige Schmelze in das Formnest eingebracht, wobei die Barriereschicht in der Mitte angeordnet ist.

In einer besonders bevorzugten Ausführungsform ist der zweite Heißkanal mit einer Dosierkammer verbunden, deren Volumen mit Hilfe eines Verstellelements eingestellt werden kann. Durch die Verwendung der Dosierkammer kann die Menge des zweiten injizierten Materials sehr genau dosiert werden. Für die Barrierefunktion reicht es im allgemeinen aus, wenn die Barriereschicht 5% des Gesamtvolumens des Vorformlings oder weniger ausmacht.

In einer bevorzugten Ausführungsform weist die Dosierkammer einen als Verstellelement arbeitenden Dosierkolben auf. Mit Hilfe des Dosierkolbens kann dann sowohl die Größe der Dosierkammer eingestellt werden als auch das in die Dosierkammer eingebrachte Material über den mittleren Zuführkanal in das Formnest übertragen werden.

Es hat sich als vorteilhaft erwiesen, wenn jedem Düsenelement eine separate Dosierkammer zugeordnet ist. Durch diese Maßnahme ist sichergestellt, daß die Dosierkammer sehr nahe an dem Formnest angeordnet werden kann, so daß sehr exakt dosiert werden kann. Im Gegensatz dazu sind im Stand der Technik Dosierkammern bekannt, die für die Zuführung der zweiten Schmelze zu mehreren Formnestern vorgesehen sind.

In einer weiteren bevorzugten Ausführungsform sind mindestens zwei Düsenelemente vorgesehen, wobei die Verstelleinrichtungen der mindestens zwei Düsenelemente mit einer gemeinsamen Dosierplatte verbunden sind, so daß durch Bewegen der Dosierplatte relativ zu der Dosierkammer das Volumen der Dosierkammer der zumindest zwei Düsenelementen gemeinsam und synchron eingestellt werden kann. Da im allgemeinen Bedarf an der Herstellung einer gro-βen Anzahl von Vorformlingen besteht, kann durch die beschriebene Maßnahme durch Bewegen der Dosierplatte eine ganze Reihe von Dosierkolben bewegt werden, so daß in einer ganzen Reihe von nebeneinander angeordneten Formnestem gleichzeitig die entsprechende Dosierung erfolgen kann.

Es ist besonders zweckmäßig, wenn die Dosierkammer im Düsenelement angeordnet ist, da dann die Kanallänge zwischen Dosierkammer und Zuführkanal entsprechend kurz ausgestaltet sein kann.

Weiterhin ist es von Vorteil, wenn der erste und der zweite Heißkanal in separaten Werkzeugteilen (auch Heißkanalplatte genannt) geführt sind. Da sich häufig die optimale Verarbeitungstemperatur der unterschiedlichen Spritzgießmaterialen unterscheidet, können die separaten Heißkanalwerkzeugelemente auf unterschiedlichen Temperaturen gehalten werden, so daß immer die optimale Verarbeitungstemperatur für jedes Spritzgießmaterial sichergestellt ist. Weiterhin kann es von Vorteil sein, wenn der erste und der zweite Heißkanal mit unterschiedlichen Drücken beaufschlagt sind.

In einer besonders bevorzugten Ausführungsform ist das Verschlußelement eine Verschlußnadel, mit deren Hilfe zumindest einer der Zuführkanäle und vorzugsweise alle Zuführkanäle verschlossen werden kann/können.

Weiterhin sind in einer bevorzugten Ausführungsform mindestens zwei Düsenelemente vorgesehen, deren Verschlußnadel mit einer gemeinsamen Steuerungsplatte verbunden sind, so daß durch Bewegen dieser Platte die Verschlußnadeln gemeinsam und synchron bewegt werden können.

Dabei ist mit Vorteil die Verstelleinrichtung und Verschlußnadel derart angeordnet, daß deren Bewegungsrichtungen zum Verstellen der Dosierkammer bzw. zum Verschließen der Zuführkanäle parallel zueinander sind. Dies ermöglicht eine besonders einfache Steuerung des Werkzeugs.

Weiterhin ist bei einer besonders bevorzugten Ausführungsform vorgesehen, daß die Dosierkammer in Stromrichtung zwischen dem zweiten Heißkanal und dem Auslaß des mittleren Zuführkanals angeordnet ist. Anders ausgedrückt ist die Dosierkammer weder im Heißkanalwerkzeugteil noch am Auslaß des mittleren Zuführkanals angeordnet.

Hinsichtlich des Verfahrens wird die eingangs genannte Aufgabe dadurch gelöst, daß unter Verwendung der erfindungsgemäßen Schmelzenzuführeinrichtung zunächst ein Formnest bereitgestellt wird, in das Formnest als erstes eine erste Schmelze aus einem ersten Spritzgießmaterial zugeführt wird, dann eine Schmelze bestehend aus mindestens drei Schichten zugeführt wird, wobei die beiden äußeren Schichten aus einem ersten Spritzgießmaterial und die mittlere Schicht aus einem zweiten Spritzgießmaterial ist, und schließlich wieder nur die erste Schmelze aus einem ersten Spritzgießmaterial in das Formnest zugeführt wird.

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren.

Es zeigen:
- Figur 1: eine Querschnittsansicht einer Ausführungsform der erfindungsgemäßen Schmelzenzuführeinrichtung,
- Figur 2: eine Querschnittsansicht der Schmelzenzuführeinrichtung von Figur 1, wobei der äußere und der innere Zuführkanal mit PET-Material gefüllt ist,
- Figur 3: eine Querschnittsansicht, wobei der mittlere Zuführkanal mit Spritzgießmaterial gefüllt und die Verschlußnadel in der ersten Position ist,
- Figur 3a: eine Detailvergrößerung von Figur 3,
- Figur 4: eine Querschnittsansicht entsprechend der Figur 3, wobei die Verschlußnadel in der zweiten Position ist,
- Figur 5: eine Querschnittsansicht entsprechend Figur 3, wobei die Verschlußnadel in der dritten Position ist,
- Figur 6: eine Querschnittsansicht entsprechend der Ansicht von Figur 5, wobei die Dosierkammer vollständig entleert ist und die Verschlußnadel in der zweiten Position ist,
- Figur 7: eine Querschnittsansicht, bei der die Verschlußnadel wieder in der ersten Position ist.

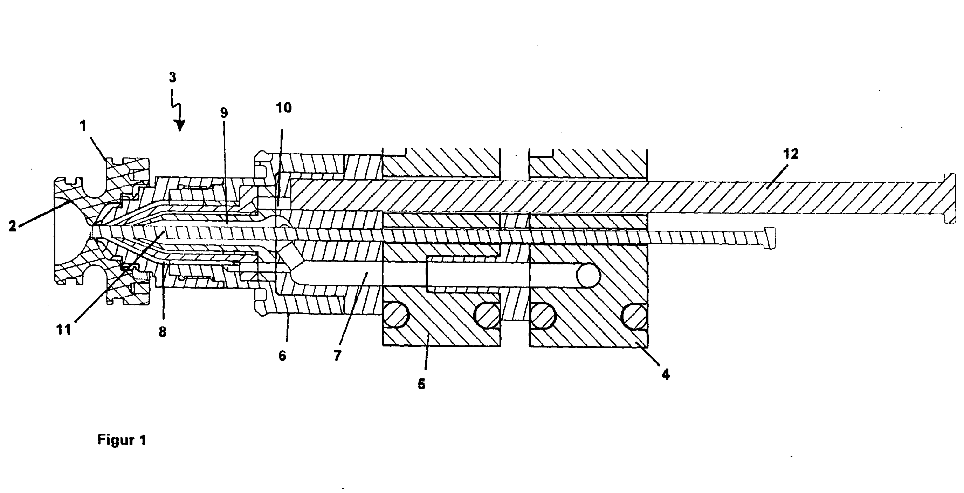

In Figur 1 ist eine besonders bevorzugte Ausführungsform der erfindungsgemäßen Schmelzenzuführeinrichtung gezeigt.

Zu erkennen ist der Bodeneinsatz 1 eines Formnestes. Das Formnest bildet einen Hohlraum, der zur Herstellung eines Vorformlings mit der flüssigen Schmelze befüllt wird. Der Hohlraum schließt sich in Figur 1 links an den Bodeneinsatz 1 an. Die Kontur 2 des Bodeneinsatzes 1 bildet die Außenkontur des Preformbodens. Der Bodeneinsatz 1 hat ein Gate bzw. eine Pforte, durch welche die flüssige Schmelze in den Hohlraum übertreten kann.

Zur Zuführung der flüssigen Schmelze ist die erfindungsgemäße Schmelzenzuführeinrichtung 3 vorgesehen. Die Schmelzenzuführeinrichtung 3 hat ein erstes Heißkanalwerkzeugteil 4, in dem der erste Heißkanal ausgebildet ist, ein zweites Heißkanalwerkzeugteit 5, in dem der zweite Heißkanal ausgebildet ist, sowie ein Düsenelement 6. Über den ersten Heißkanal (im Heißkanalwerkzeugteil 4) wird eine erste Schmelze aus einem ersten Material, zum Beispiel PET, zugeführt. Der zweite Heißkanal (im zweiten Heißkanalwerkzeugteil 5) dient der Zuführung einer zweiten Schmelze aus einem anderen Material, zum Beispiel PA- oder PE-basierte Kunststoffe.

Von dem ersten Heißkanal (im Heißkanalwerkzeugteil 4) erstreckt sich ein erster Zuführkanal 7, welcher sich in einen äußeren Zuführkanal 8 und einen inneren Zuführkanal 9 verzweigt.

Der zweite Heißkanal (im zweiten Heißkanalwerkzeugteil 5) ist mit dem mittleren Zuführkanal 10 verbunden. Die drei Zuführkanäle 8, 9, 10 sind ringförmig ausgestaltet und konzentrisch um eine Verschlußnadel 11 angeordnet. Zu erkennen ist weiterhin ein Dosierkolben 12, dessen Funktion im folgenden noch erläutert wird.

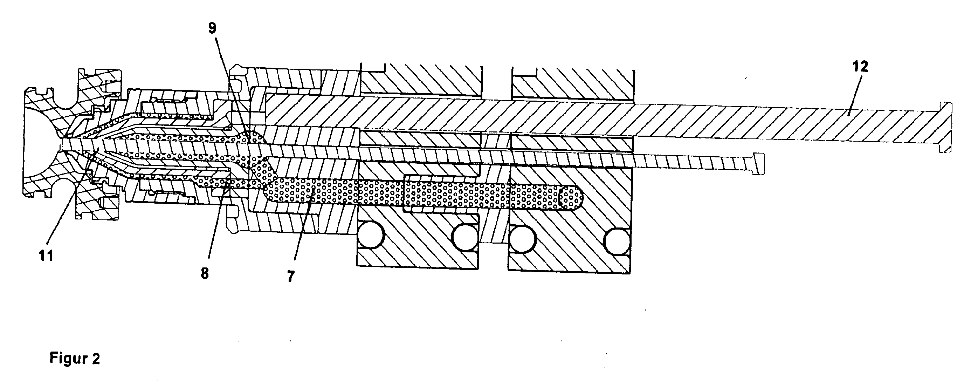

Figur 2 entspricht im wesentlichen Figur 1, wobei jetzt der Zuführkanal 7 mit seinen zwei Zweigen 8 und 9 mit dem ersten Spritzgießmaterial, zum Beispiel PET, gefüllt ist. Man erkennt deutlich, daß die konzentrisch um die Verschlußnadel angeordneten Zuführkanäle 8, 9 ihren Ausgang direkt an der Verschlußnadel 11 haben.

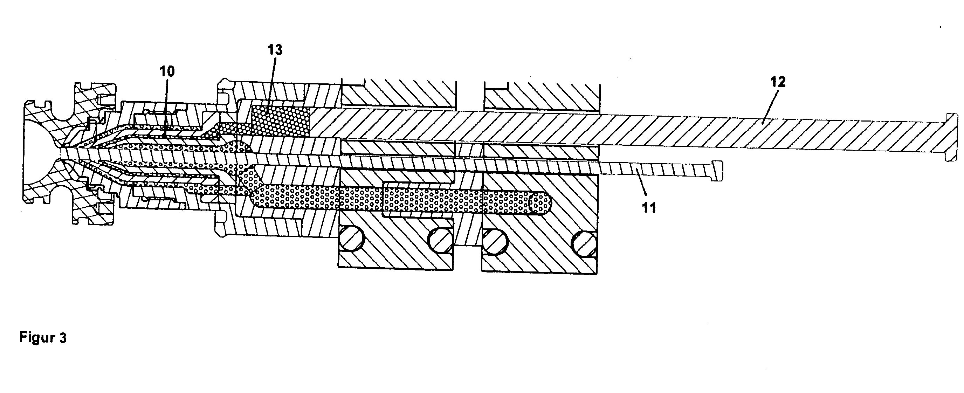

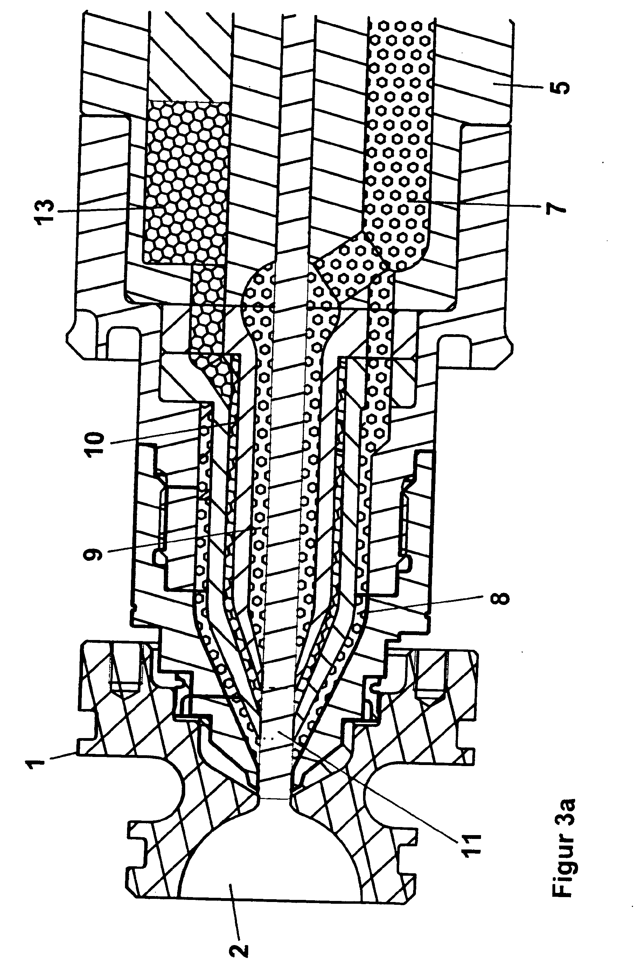

Um das zweite Spritzgießmaterial, aus dem die Barriereschicht hergestellt werden soll, zuzuführen, wird zunächst der Dosierkolben 12 von der in Figur 1 gezeigten Position in die in Figur 3 gezeigte Position gebracht. Dadurch öffnen sich die Dosierkammer 13, durch die das zweite Spritzgießmaterial eingebracht wird. Dieses fließt in den mittleren Zuführkanal 10, der sich ebenfalls bis zu der Verschlußnadel 11 hin erstreckt.

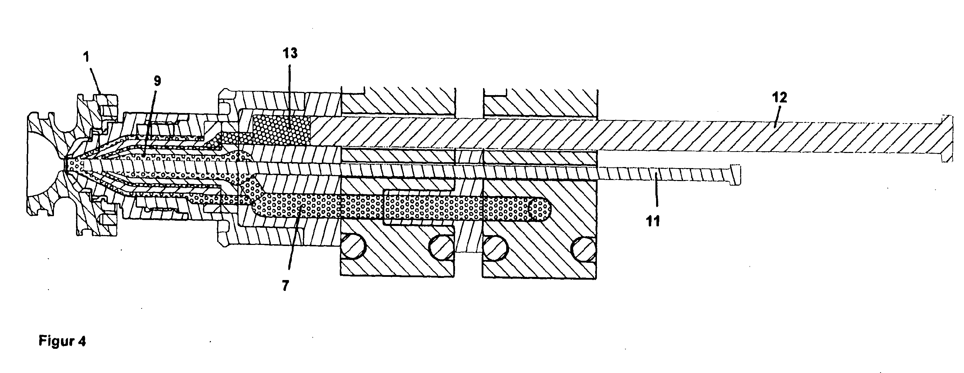

Um nun einen mehrschichtigen Vorformling herzustellen, wird zunächst die Verschlußnadel 11 von der in Figur 3 gezeigten ersten Position, in der die Verschlußnadel 11 alle drei Zuführkanäle 8, 9, 10 verschließt, in die in Figur 4 gezeigte zweite Position gebracht, in der die Verschlußnadel 11 so weit zurückgezogen (in Figur 4 nach rechts) ist, daß der äußere Zuführkanal 9 freigegeben ist, so daß die erste Schmelze über den äußeren Zuführkanal in das Formnest über den Bodeneinsatz 1 eindringen kann. In dieser Position wird lediglich eine Schmelze in das Formnest eingebracht. Diese Schmelze dient dazu, den Gewindeabschnitt (nicht gezeigt) des Vorformlings zu bilden, da die Barriereschicht hier nicht notwendig ist und im allgemeinen zu einer Herabsetzung der Stabilität der Gewinde der Vorformlinge führt. Darüber hinaus kann es zu einer Delaminierung der einzelnen Schichten kommen, so daß es vorteilhaft ist, wenn die Barriereschicht möglichst vollständig in dem PET-Basismaterial eingebunden ist.

Zur besseren Verdeutlichung ist in Figur 3a die Schmelzenzuführeinrichtung und insbesondere das Düsenelement 6 noch einmal als Detailvergrößerung dargestellt.

In der in Figur 4 gezeigten Position kann nun über eine mit dem Zuführkanal 7 verbundene Extruderschnecke oder einen entsprechenden Dosierkolben die erste Schmelze zugeführt werden, bis im wesentlichen die Materialmenge in das Formnest eingebracht worden ist, die für das Ausbilden des Gewindeabschnitts notwendig ist.

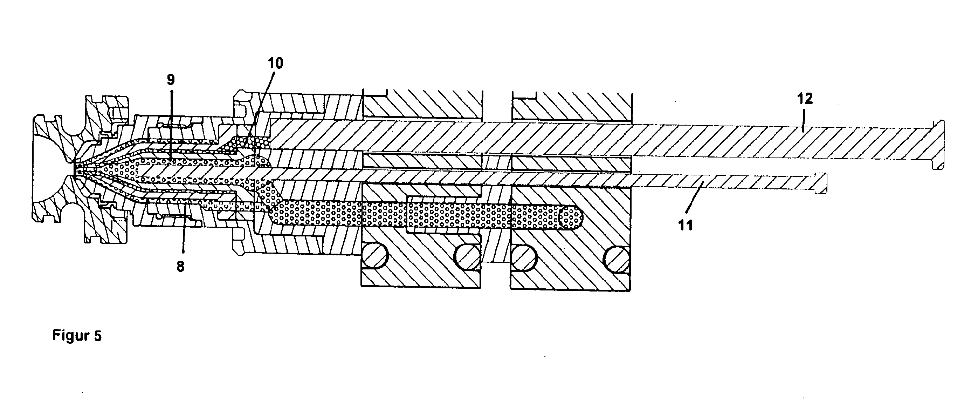

Im nächsten Schritt wird nun die Verschlußnadel 11 von der in Figur 4 gezeigten zweiten Position in die in Figur 5 gezeigte dritte Position gebracht. In dieser dritten Position ist die Verschlußnadel 11 so weit nach hinten gezogen worden, daß jetzt alle drei konzentrisch angeordneten Zuführkanäle 8, 9, 10 offen sind. Das erste Spritzgießmaterial wird nun über den äußeren und inneren Zuführkanal 8, 9 in das Formnest übertragen.

Um auch das zweite Spritzgießmaterial, das sich in der Dosierklammer 13 befindet, in das Formnest zu übertragen, wird nun der Dosierkolben 12 in Richtung der Dosierkammer 13 bewegt, so daß das sich darin befindliche Material über den mittleren Zuführkanal 10 in das Formnest ausgegeben wird.

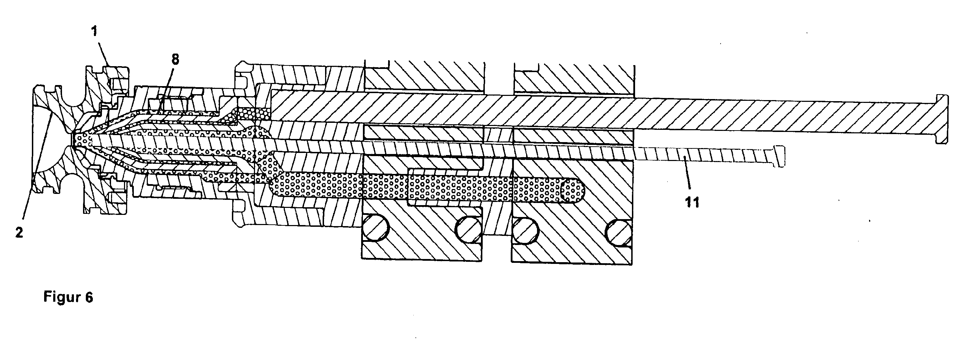

Schließlich wird in einem weiteren Schritt, der in Figur 6 gezeigt ist, die Verschlußnadel 11 von der dritten Position zurück in die zweite Position gebracht, in der wieder lediglich der äußere Zuführkanal 8 geöffnet ist, während die beiden anderen Zuführkanäle 9, 10 geschlossen sind. Jetzt wird wieder ausschließlich das erste Spritzgießmaterial in das Formnest eingebracht. Dies hat zur Folge, daß der unterste Abschnitt des Vorformlings, der mit dem Bodeneinsatz 1 in Kontakt tritt, abschnittsweise nur einschichtig ausgebildet ist. Dadurch wird sichergestellt, daß im Angußbereich, d.h. im Boden der Vorformlings, kein Barrierematerial vorhanden ist. Dies verringert die Gefahr eines Platzens des Vorformlings während des nachgeschalteten Strackblasformschrittes.

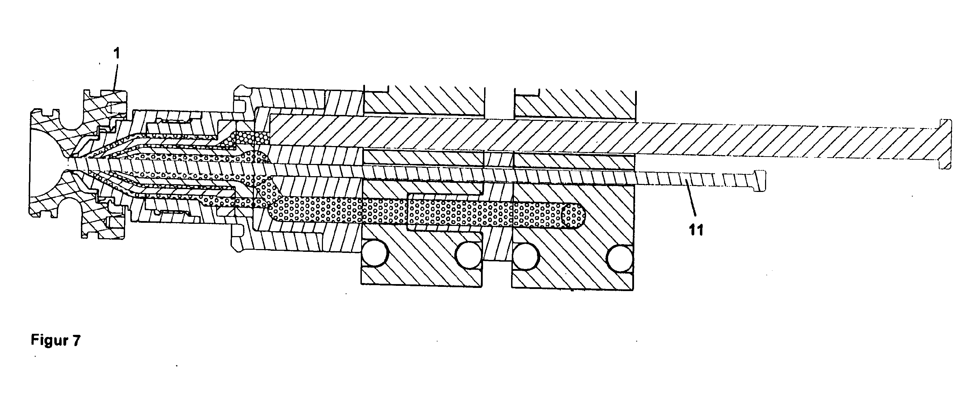

Schließlich wird, wie in Figur 7 gezeigt ist, der Spritzgießvorgang dadurch beendet, daß die Verschlußnadel 11 wieder in ihre erste Position gebracht wird, die sämtliche Zuführkanäle und damit die Pforte des Bodeneinsatzes 1 verschließt.

Sobald der Vorformling in dem Formnest genügend abgekühlt ist, kann der Vorformling entnommen werden, das Formnest wieder geschlossen werden und der Spritzgießvorgang beginnt von neuem.

### Bezugszeichenliste

- 1: Bodeneinsatz
- 2: Kontur des Bodeneinsatzes
- 3: Schmelzenzuführeinrichtung
- 4: erstes Heißkanalwerkzeugteil
- 5: zweites Heißkanalwerkeugteil
- 6: Düsenelement
- 7: erster Zuführkanal
- 8: äußerer Zuführkanal
- 9: innerer Zuführkanal
- 10: mittlerer Zuführkanal
- 11: Verschlußnadel
- 12: Dosierkolben
- 13: Dosierkammer

## Patentansprüche

1. Schmelzenzuführeinrichtung für eine Spritzgießvorrichtung mit einem ersten Heißkanal (4) zur Zuführung einer Schmelze eines ersten Spritzgießmaterials unter Druck und einem zweiten Heißkanal (5) zur Zuführung einer Schmelze eines zweiten Spritzgießmaterials sowie mindestens einem Düsenelement (6), welches mit sowohl dem ersten (4) als auch dem zweiten (5) Heißkanal verbunden ist, zur Zuführung von sowohl der ersten Schmelze als auch der zweiten Schmelze in eine Spritzgießform, wobei das mindestens eine Düsenelement (6) drei im wesentlichen konzentrisch angeordnete Zuführkanäle hat, wobei der innerste (9) und der äußerste (9) Zuführkanal mit dem ersten Heißkanal (4) in Verbindung stehen und der mittlere Zuführkanal (10) mit dem zweiten Heißkanal (5) in Verbindung steht, wobei ein Verschlußelement (11) vorgesehen ist, das zwischen einer ersten Position, in der das Verschlußelement alle Zuführkanäle (7, 8, 9, 10) verschließt und einer dritten Position, in der das Verschlußelement (11) alle Zuführkanäle (7, 8, 9, 10) öffnet, hin- und herbewegt werden kann, **dadurch gekennzeichnet, dass** das Verschlu-βelement (11) in eine zweite Position bewegt werden kann, in der das Verschlußelement den äußersten Zuführkanal (8) öffnet, die beiden anderen Zuführkanäle (9, 10) jedoch verschließt.

2. Schmelzenzuführeinrichtung nach Anspruch 1, **dadurch gekennzeichnet, daß** der zweite Heißkanal (5) mit einer Dosierkammer (13) verbunden ist, deren Volumen mit Hilfe eines Verstellelements (12) eingestellt werden kann.

3. Schmelzenzuführeinrichtung nach Anspruch 2, **dadurch gekennzeichnet, daß** die Dosierkammer einen als Verstellelement arbeitenden Dosierkolben (12) aufweist.

4. Schmelzenzuführeinrichtung nach Anspruch 2 oder 3, **dadurch gekennzeichnet, daß** jedem Düsenelement (6) eine separate Dosierkammer (13) zugeordnet ist.

5. Schmelzenzuführeinrichtung nach Anspruch 4, **dadurch gekennzeichnet, daß** mindestens zwei Düsenelemente (6) vorgesehen sind, wobei die Verstelleinrichtungen der mindestens zwei Düsenelemente (6) mit einer gemeinsamen Dosierplatte verbunden sind, so daß durch Bewegen der Dosierplatte relativ zu der Dosierkammer (13) das Volumen der Dosierkammern (13) der zumindest zwei Düsenelemente (6) gemeinsam und synchron eingestellt werden kann.

6. Schmelzenzuführeinrichtung nach Anspruch 4 oder 5, **dadurch gekennzeichnet, daß** die Dosierkammer (13) im Düsenelement (6) angeordnet ist.

7. Schmelzenzuführeinrichtung nach einem der Ansprüche 1 bis 6, **dadurch gekennzeichnet, daß** erster und zweiter Heißkanal (5) in separaten Werkzeugteilen geführt sind.

8. Schmelzenzuführeinrichtung nach einem der Ansprüche 1 bis 7, **dadurch gekennzeichnet, daß** das Verschlußelement eine Verschlußnadel (11) ist, mit deren Hilfe zumindest einer der Zuführkanäle und vorzugsweise alle Zuführkanäle (7, 8, 9, 10) verschlossen werden kann.

9. Schmelzenzuführeinrichtung nach Anspruch 8, **dadurch gekennzeichnet, daß** mindestens zwei Düsenelemente (6) vorgesehen sind, deren Verschlußnadeln (11) mit einer gemeinsamen Steuerungsplatte verbunden sind, so daß durch Bewegen der Steuerungsplatte die Verschlußnadeln (11) gemeinsam und synchron bewegt werden können.

10. Schmelzenzuführeinrichtung nach einem der Ansprüche 2 bis 6, **dadurch gekennzeichnet, daß** Verstelleinrichtung und Verschlußnadel (11) derart angeordnet sind, daß deren Bewegungsrichtungen zum Verstellen der Dosierkammer (13) bzw. zum Verschließen der Zuführkanäle (7, 8, 9, 10) parallel zueinander sind.

11. Schmelzenzuführeinrichtung nach einem der Ansprüche 2 bis 6 oder 10, **dadurch gekennzeichnet, daß** die Dosierkammer (13) zwischen zweitem Heißkanal (5) und mittlerem Zuführkanal (10) angeordnet ist.

12. Spritzgießvorrichtung zur Herstellung eines Formlings mit einer Schmelzenzuführeinrichtung zur Zuführung einer Schmelze nach einem der Ansprüche 1 bis 11.

13. Verfahren zum Herstellen eines mehrschichtigen Vorformlings, welches nacheinander die Schritte aufweist:
- Bereitstellen eines Formnestes,
- Zuführen einer Schmelze aus einem ersten Spritzgießmaterial in das Formnest,
- Zuführen einer Schmelze aus mindestens drei Schichten, wobei die beiden äußeren Schichten aus einem ersten Spritzgießmaterial und die mittlere Schicht aus einem zweitem Spritzgießmaterial ist und
- Zuführen einer Schmelze aus einem ersten Spritzgießmaterial in das Formnest, **dadurch gekennzeichnet, dass** eine Schmelzenzuführeinrichtung nach einem der Ansprüche 1 bis 12 verwendet wird.

14. Verfahren nach Anspruch 13, **dadurch gekennzeichnet, daß** eine Schmelzenzuführeinrichtung mit drei im wesentlichen konzentrisch zueinander angeordneten Zuführkanälen verwendet wird, wobei das Zuführen einer Schmelze aus einem ersten Spritzgießmaterial in das Formnest durch Zuführen der Schmelze über den äußersten Zuführkanal erfolgt, und das Zuführen einer Schmelze aus mindestens drei Schichten, wobei die beiden äu-βeren Schichten aus einem ersten Spritzgießmaterial und die mittlere Schicht aus einem zweitem Spritzgießmaterial ist, über alle drei Zuführkanäle erfolgt.

## Claims

1. A melt feed device for an injection molding apparatus comprising a first hot runner (4) for feeding a melt of a first injection molding material under pressure and a second hot runner (5) for feeding a melt of a second injection molding material and at least one nozzle element (6) connected both to the first hot runner (4) and also to the second hot runner (5) for feeding both the first melt and also the second melt into an injection molding mold, wherein the at least one nozzle element (6) has three substantially concentrically arranged feed passages, wherein the innermost (9) and the outermost (9) feed passage are in communication with the first hot runner (4) and the central feed passage (10) is in communication with the second hot runner (5) **characterized in that** there is provided a closure element (11) which can be reciprocated between a first position in which the closure element closes all feed passages (7, 8, 9, 10), and a third position in which the closure element (11) opens all feed passages (7, 8, 9, 10) **characterized in that** the closure element (11) is moveable into a second position in which the closure element opens the outermost feed passage (8) but closes the other two feed passages (9, 10).

2. A melt feed device as set forth in claim 1 **characterized in that** the second hot runner (5) is connected to a metering chamber (13), the volume of which can be adjusted by means of a displacement element (12).

3. A melt feed device as set forth in claim 2 **characterized in that** the metering chamber has a metering piston (12) operating as the displacement element.

4. A melt feed device as set forth in claim 2 or claim 3 **characterized in that** a separate metering chamber (13) is associated with each nozzle element (6).

5. A melt feed device as set forth in claim 4 **characterized in that** there are provided at least two nozzle elements (6), wherein the displacement devices of the at least two nozzle elements (6) are connected to a common metering plate so that the volume of the metering chambers (13) of the at least two nozzle elements (6) can be jointly and synchronously adjusted by movement of the metering plate relative to the metering chamber (13).

6. A melt feed device as set forth in claim 4 or claim 5 **characterized in that** the metering chamber (13) is arranged in the nozzle element (6).

7. A melt feed device as set forth in one of claims 1 through 6 **characterized in that** the first and second hot runner (5) are guided in separate tool portions.

8. A melt feed device as set forth in one of claims 1 through 7 **characterized in that** the closure element is a closure needle (11), by means of which at least one of the feed passages and preferably all feed passages (7, 8, 9, 10) can be closed.

9. A melt feed device as set forth in claim 8 **characterized in that** there are provided at least two nozzle elements (6) whose closure needles (11) are connected to a common control plate so that the closure needles (11) can be moved jointly and synchronously by movement of the control plate.

10. A melt feed device as set forth in one of claims 2 through 6 **characterized in that** the displacement device and the closure needle (11) are so arranged that the directions of movement thereof for displacement of the metering chamber (13) and for closure of the feed passages (7, 8, 9, 10) respectively are parallel to each other.

11. A melt feed device as set forth in one of claims 2 through 6 or 10 **characterized in that** the metering chamber (13) is arranged between the second hot runner (5) and the central feed passage (10).

12. A injection molding apparatus for the production of a molding having a melt feed device for feeding a melt as set forth in one of claims 1 through 11.

13. A process for the production of a multi-layer parison which successively comprises the following steps:
- providing a mold cavity structure,
- feeding a melt of a first injection molding material into the mold cavity structure,
- feeding a melt comprising at least three layers, wherein the two outer layers are of a first injection molding material and the central layer is of a second injection molding material, and
- feeding a melt comprising a first injection molding material into the mold cavity structure **characterized in that** a melt feed device as set forth in claims 1 through 12 is used.

14. A process as set forth in claim 13 **characterized in that** a melt feed device having three substantially mutually concentrically arranged feed passages is used, wherein the feed of a melt comprising a first injection molding material into the mold cavity structure is effected by feeding the melt by way of the outermost feed passage, and the feed of a melt comprising at least three layers, wherein the two outer layers comprise a first injection molding material and the central layer comprises a second injection molding material, is effected by way of all three feed passages.

## Revendications

1. Dispositif d'amenée de masse fondue pour dispositif de moulage par injection, ledit dispositif d'amenée de masse fondue comportant un premier canal chaud (4) destiné à amener une masse fondue d'un premier matériau de moulage par injection sous pression et un deuxième canal chaud (5) destiné à amener une masse fondue d'un deuxième matériau de moulage par injection ainsi qu'au moins un élément formant filière (6) qui est relié au premier canal chaud (4) et au deuxième canal chaud (5) et qui est destiné à amener la première masse fondue ainsi que la deuxième masse fondue dans un moule de moulage par injection, l'au moins un élément formant filière (6) possédant trois canaux d'amenée disposés de façon sensiblement concentrique, le canal d'amenée le plus intérieur (9) et le canal d'amenée le plus extérieur (9) étant en liaison avec le premier canal chaud (4) et le canal d'amenée médian (10) étant en liaison avec le deuxième canal chaud, un élément de fermeture (11) étant prévu qui est apte à effectuer un mouvement de va-et-vient entre une première position dans laquelle l'élément de fermeture ferme tous les canaux d'amenée (7, 8, 9, 10) et une troisième position dans laquelle l'élément de fermeture (11) ouvre tous les canaux d'amenée (7, 8, 9, 10), **caractérisé en ce que** l'élément de fermeture (11) peut être déplacé dans une deuxième position dans laquelle l'élément de fermeture ouvre le canal d'amenée le plus extérieur (8) mais ferme les deux autres canaux d'amenée (9, 10).

2. Dispositif d'amenée de masse fondue selon la revendication 1, **caractérisé en ce que** le deuxième canal chaud (5) est relié à une chambre de dosage (13) dont le volume peut être réglé à l'aide d'un élément de réglage (12).

3. Dispositif d'amenée de masse fondue selon la revendication 2, **caractérisé en ce que** la chambre de dosage comporte un piston de dosage (12) fonctionnant comme un élément de réglage.

4. Dispositif d'amenée de masse fondue selon la revendication 2 ou 3, **caractérisé en ce qu'**une chambre de dosage (13) séparée est associée à chaque élément formant filière (6).

5. Dispositif d'amenée de masse fondue selon la revendication 4, **caractérisé en ce que** au moins deux éléments formant filière (6) sont prévus, les dispositifs de réglage des au moins deux éléments formant filière (6) étant reliés à une plaque de dosage commune de sorte que l'on peut régler le volume des chambres de dosage (13) des au moins deux éléments formant filière (6) ensemble et de façon synchrone en déplaçant la plaque de dosage par rapport à la chambre de dosage (13).

6. Dispositif d'amenée de masse fondue selon la revendication 4 ou 5, **caractérisé en ce que** la chambre de dosage (13) est disposée dans l'élément formant filière (6).

7. Dispositif d'amenée de masse fondue selon l'une des revendications 1 à 6, **caractérisé en ce que** des premier et deuxième canaux chauds (5) sont ménagés dans des pièces d'outil séparées.

8. Dispositif d'amenée de masse fondue selon l'une des revendications 1 à 7, **caractérisé en ce que** l'élément de fermeture est une aiguille de fermeture à l'aide de laquelle au moins un des canaux d'amenée et avantageusement tous les canaux d'amenée (7, 8, 9, 10) peuvent être fermés.

9. Dispositif d'amenée de masse fondue selon la revendication 8, **caractérisé en ce que** au moins deux éléments formant filière (6) sont prévus dont les aiguilles de fermeture (11) sont reliées à une plaque de commande commune de sorte que l'on peut déplacer les aiguilles de fermeture (11) ensemble et de façon synchrone en déplaçant la plaque de commande.

10. Dispositif d'amenée de masse fondue selon l'une des revendications 2 à 6, **caractérisé en ce que** le dispositif de réglage et les aiguilles de fermeture (11) sont disposés de telle sorte que leurs sens de déplacement sont parallèles entre eux afin de régler la chambre de dosage (13) ou de fermer les canaux d'amenée (7, 8, 9, 10).

11. Dispositif d'amenée de masse fondue selon l'une des revendications 2 à 6 ou 10, **caractérisé en ce que** la chambre de dosage (13) est disposée entre le deuxième canal chaud (5) et le canal d'amenée médian (10).

12. Dispositif de moulage par injection destiné à fabriquer une préforme, ledit dispositif de moulage par injection comportant un dispositif d'amenée de masse fondue destiné à amener une masse fondue selon l'une des revendications 1 à 11.

13. Procédé de fabrication d'une préforme multicouche qui comporte successivement les étapes consistant à :
- prévoir une cavité de moulage,
- amener une masse fondue constituée d'un premier matériau de moulage par injection dans la cavité de moulage,
- amener une masse fondue constituée d'au moins trois couches, les deux couches extérieures étant constituées d'un premier matériau de moulage par injection et la couche médiane étant constituée d'un deuxième matériau de moulage par injection et
- amener une masse fondue constituée d'un premier matériau de moulage par injection dans la cavité de moulage,
**caractérisé en ce que** l'on utilise un dispositif d'amenée de masse fondue selon l'une des revendications 1 à 12.

14. Procédé selon la revendication 13, **caractérisé en ce que** l'on utilise un dispositif d'amenée de masse fondue comportant trois canaux d'amenée disposés sensiblement concentriquement l'un à l'autre, l'amenée d'une masse fondue constituée d'un premier matériau de moulage par injection dans la cavité de moulage s'effectuant en amenant la masse fondue par le canal d'amenée le plus extérieur et l'amenée d'une masse fondue constituée d'au moins trois couches, les deux couches extérieures étant constituées d'un premier matériau de moulage par injection et la couche médiane étant constituée d'un deuxième matériau de moulage par injection, s'effectuant par les trois canaux d'amenée.
